# EUROPEAN PATENT APPLICATION

(11) **EP 4 681 947 A1**
(43) Date of publication of application: **21.01.2026**
(21) Application number: 23926793.3
(22) Date of filing: 16.03.2023
(51) Int. Cl.: B60H 1/34, F24F 13/15

(54) **AIR OUTPUT DEVICE AND VEHICLE**

(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Weilin, Ningbo, Zhejiang 315899 (CN); HU, Lei, Ningbo, Zhejiang 315899 (CN); XIA, Songyong, Ningbo, Zhejiang 315899 (CN)
(74) Representative: Boult Wade Tennant LLP
(86) International application number: PCT/CN2023/081765
(87) International publication number: WO 2024/187438

(57) **Abstract**

Embodiments of the present application provide an air output device and a vehicle, which relate to the technical field of vehicles. The air output device includes a vent housing, a grille assembly and a rotating assembly; the grille assembly includes a plurality of grilles and a plurality of direction-adjusting members, the rotating assembly includes a driving mechanism and a plurality of rotators, and each rotator includes a first groove portion and a second groove portion. When the plurality of rotators stop and the plurality of direction-adjusting members are each located in the first groove portion of a corresponding rotator, air-blowing in a fixed direction can be achieved. When the plurality of rotators stop and the plurality of direction-adjusting members are each located in the second groove portion of a corresponding rotator, and when the plurality of rotators rotate and the plurality of direction-adjusting members are each located in the first groove portion and/or the second groove portion of a corresponding rotator, air-blowing direction concentrating in a certain direction can be avoided and the effect of simulating natural wind can be achieved. Thus, diversified air-blowing modes of the air outlet are realized, meeting diverse needs of user.

## Description

### TECHNICAL FIELD

The present application relates to the technical field of vehicles, and in particular to an air output device and a vehicle.

### BACKGROUND

An air conditioner is an important functional component in a vehicle and is configured to adjust the temperature and humidity in the vehicle to provide a comfortable environment for an occupant. An air outlet of the air conditioner in the vehicle has a function of controlling the air flow and changing the air-blowing direction.

In the prior art, the air-blowing direction of the air outlet is adjusted in a manual manner. When the occupant in the vehicle changes the air-blowing direction of the air conditioner, a toggle button on a grille assembly is required to be adjusted manually to allow the grille assembly to be at a certain angle. When the toggle button is no longer adjusted, the grille assembly will be fixed in that direction, and keep blowing only in that direction.

However, the air outlet has a single air-blowing mode, and blows air only in one fixed direction, failing to meet diverse needs of users.

### SUMMARY

In view of the above problems, embodiments of the present application provide an air output device and a vehicle to solve the problem of failing to meet diverse needs of users due to that the air outlet has a single air-blowing mode and blows air only in one fixed direction.

The embodiments of the present application provide the following technical solutions to solve the above technical problem.

In one aspect, an embodiment of the present application provides an air output device, including a vent housing, a grille assembly and a rotating assembly, where
the vent housing has an air outlet, the grille assembly is disposed in the air outlet, and the rotating assembly is disposed on the vent housing;
the grille assembly includes a plurality of grilles and a plurality of direction-adjusting members, each of the grilles is fixedly connected to one of the direction-adjusting members, and the direction-adjusting members are configured to adjust air-guiding directions of the grilles;
the rotating assembly includes a driving mechanism and a plurality of rotators, and the driving mechanism is configured to allow the plurality of rotators to rotate or stop, each of the rotators includes a first groove portion and a second groove portion, the first groove portion and the second groove portion are connected in a circumferential direction of the rotator, and the first groove portion and the second groove portion are configured to adjust a position of the direction-adjusting members in a rotating direction of the grilles;
the plurality of direction-adjusting members are configured to allow all grilles of the grille assembly to have a same air-guiding direction when the plurality of rotators stop and the plurality of direction-adjusting members are each located in the first groove portion of a corresponding rotator;
the plurality of direction-adjusting members are configured to allow at least two grilles to have different air-guiding directions when the plurality of rotators stop and the plurality of direction-adjusting members are each located in the second groove portion of a corresponding rotator; and/or,
the plurality of direction-adjusting members are configured to allow all grilles of the grille assembly to have changeable air-guiding directions when the plurality of rotators rotate and the plurality of direction-adjusting members are each located in the first groove portion and/or the second groove portion of a corresponding rotator.

Optionally, the vent housing includes a vent outer plate and a vent inner plate, the vent outer plate has an air passage, the vent inner plate is disposed in the air passage, and the vent inner plate is configured to divide the air outlet into a first outlet and a second outlet; and
multiple grilles are provided in the first outlet, and multiple grilles are provided in the second outlet.

Optionally, the vent inner plate includes a first inner plate and a second inner plate, the first inner plate and the second inner plate are connected with each other, and the first inner plate and the second inner plate enclose to form a cavity;
the rotating assembly is located in the cavity, and the driving mechanism includes a driving motor, a transmission assembly, a rotating shaft and two mounting seats, the driving motor and the two mounting seats are mounted on the second inner plate, the rotating shaft is rotatably mounted on the two mounting seats, and the plurality of rotators are fixed on the rotating shaft, the driving motor is configured to allow the plurality of rotators to rotate or stop through the transmission assembly.

Optionally, the first groove portion of the rotator includes a first groove and a third groove, and the second groove portion of the rotator includes a second groove and a fourth groove, and in the circumferential direction of the rotator, the first groove is connected to the second groove and the fourth groove, respectively, and the third groove is connected to the second groove and the fourth groove, respectively;
the first groove, the second groove, the third groove and the fourth groove are connected in sequence on a spread plane of a circumferential surface of the rotator, the first groove coincides with the third groove after being translated 180° on the spread plane along an extension direction of the spread plane, and the second groove is completely misaligned with the fourth groove after being translated 180° on the spread plane along the extension direction of the spread plane.

Optionally, two direction-adjusting members of each of the rotators correspond to one grille in the first outlet and one grille in the second outlet, respectively, and the two direction-adjusting members on each of the rotators are apart by 180° in the circumferential direction of the rotator.

Optionally, five grilles are provided in the first outlet, and five grilles are provided in the second outlet, the rotating assembly includes five rotators, two direction-adjusting members are provided on each of the rotators, spread planes of the circumferential surfaces of the five rotators are first spread planes; the five rotators include a first rotator, a second rotator, a third rotator, a fourth rotator and a fifth rotator; the first grooves of the first rotator, the second rotator, the third rotator, the fourth rotator and the fifth rotator coincide in the first spread planes, and the third grooves of the first rotator, the second rotator, the third rotator, the fourth rotator and the fifth rotator coincide on the first spread planes; and the second grooves of the first rotator, the second rotator, the third rotator, the fourth rotator and the fifth rotator are completely misaligned on the first spread planes, and the fourth grooves of the first rotator, the second rotator, the third rotator, the fourth rotator and the fifth rotator are completely misaligned on the first spread planes.

Optionally, the driving motor is a stepper motor, the transmission assembly includes a driving gear and a driven gear, the driving gear is fixed on a motor shaft of the stepper motor, the driven gear is fixed on the rotating shaft, and the driving gear is engaged with the driven gear.

Optionally, the direction-adjusting member includes a direction-adjusting ball and a direction-adjusting rod, one end of the direction-adjusting rod is fixedly connected to the grille, the other end of the direction-adjusting rod is fixedly connected to the direction-adjusting ball, and the direction-adjusting ball is embedded in the first groove portion and the second groove portion.

Optionally, the direction-adjusting member further includes a baffle, the baffle is fixed to the direction-adjusting rod, the vent inner plate has a through hole, the direction-adjusting rod passes through the through hole, and the baffle covers the through hole.

On the other hand, an embodiment of the present application provides a vehicle, including an air-conditioner body and the air output device as described above;
where the air output device is detachably installed on the air-conditioner body.

The embodiments of the present application provide an air output device and a vehicle, including a vent housing, a grille assembly and a rotating assembly; where the grille assembly includes a plurality of grilles and a plurality of direction-adjusting members, the rotating assembly includes a driving mechanism and a plurality of rotators, and each rotator includes a first groove portion and a second groove portion. When the plurality of rotators stop and the plurality of direction-adjusting members are each located in the first groove portions of a corresponding rotator, all grilles of the grille assembly have the same air-guiding direction through the plurality of direction-adjusting members, which may achieve air-blowing in a fixed direction. When the plurality of rotators stop and the plurality of direction-adjusting members are each located in the second groove portion of a corresponding rotator, at least two grilles have different air-guiding directions through the plurality of direction-adjusting members. And when the plurality of rotators rotate and the plurality of direction-adjusting members are each located in the first groove portion and/or the second groove portion of a corresponding rotator, all grilles of the grille assembly have changeable air-guiding directions through the plurality of direction-adjusting members, which can prevent the air-blowing from concentrating in one direction, achieving an effect of simulating natural wind. Thus, diversified air-blowing modes of the air outlet can be achieved, meeting diverse needs of users.

### BRIEF DESCRIPTION OF DRAWINGS

In order to illustrate the technical solutions in the embodiments of the present application or in the prior art more clearly, the accompanying drawings required in the description of the embodiments or the prior art description will be briefly introduced below. Obviously, the accompanying drawings in the following description refer to some embodiments of the present application. For those skilled in the art, other accompanying drawings can also be obtained based on these accompanying drawings without any creative labor.
FIG. 1 is a schematic structural diagram of an air output device provided by an embodiment of the present application.
FIG. 2 is a schematic structural diagram of the air output device in FIG. 1 after removing a vent outer plate.
FIG. 3 is a schematic structural diagram of the air output device in FIG. 1 after removing the vent outer plate and vent inner plate.
FIG. 4 is a first partial schematic diagram of the air output device in FIG. 1.
FIG. 5 is a second partial schematic diagram of the air output device in FIG. 1.
FIG. 6 is a schematic structural diagram of a rotating assembly of the air output device in FIG. 2 after removing rotators.
FIG. 7 is a schematic structural diagram of a rotating assembly of the air output device in FIG. 2 after removing a driving motor and a driving gear.
FIG. 8 is a schematic structural diagram of a rotator of the rotating assembly of the air output device in FIG. 2.
FIG. 9 is a schematic diagram of a circumferential surface of the rotator in FIG. 8.
FIG. 10 is a spread schematic diagram of the circumferential surface in FIG. 9.

Illustration of reference signs:

| | | | |
|---|---|---|---|
| 10- | vent housing; | 101- | air outlet; |
| 1011- | first outlet; | 1012- | second outlet; |
| 11- | vent outer plate; | 12- | vent inner plate; |
| 121- | first inner plate; | 122- | second inner plate; |
| 123- | cavity; | 20- | grille assembly; |
| 21- | grille; | 22- | direction-adjusting member; |
| 221- | direction-adjusting ball; | 222- | direction-adjusting rod; |
| 223- | baffle; | 30- | rotating assembly; |
| 31- | rotator; | 3111- | first groove; |
| 3112- | third groove; | 3121- | second groove; |
| 3122- | fourth groove; | 32- | driving motor; |
| 33- | transmission assembly; | 331- | driving gear; |
| 332- | driven gear; | 34- | rotating shaft; |
| 35- | mounting seat | | |

### DESCRIPTION OF EMBODIMENTS

In order to make the purposes, technical solutions and advantages of the embodiments of the present application clearer, the technical solutions in the embodiments of the present application will be clearly and completely described with reference to the accompanying drawings in the embodiments of the present application. Obviously, the described embodiments are part of the embodiments of the present application, but not all of the embodiments. Based on the embodiments in the present application, all other embodiments obtained by those skilled in the art without creative labor are within the protection scope of the present application.

It should be noted that the terms "first" and "second" are for descriptive purposes only and cannot be understood as indicating or implying relative importance or implying the number of technical features indicated. Thus, a feature defined by "first" or "second" may include at least one such feature explicitly or implicitly. In the description of the present application, unless otherwise specifically defined, "a plurality of" means at least two, e.g., two, three, etc.

In the present application, unless otherwise expressly specified and defined, the terms such as "install", "connect", "fix" should be understood in a broad sense. For example, it may be fixed connections, removable connections, or integrated; it may be mechanical connections, electrical connections or communicable to each other; it may be direct connections, or indirect connections through an intermediate medium, or may be communication within two elements or interaction between the two elements, unless otherwise specifically defined. For those skilled in the art, the specific meaning of the above terms in the present application can be understood in accordance with the specific circumstances.

In the present application, unless otherwise expressly specified and defined, a first feature being provided on or below a second feature may refer to that the first feature is in a direct contact with the second feature, or the first feature is in an indirect contact with the second feature through an intermediate medium. Furthermore, the first feature being provided on, above or over the second feature may indicate that the first feature is directly above or obliquely above the second feature, or simply indicate that the first feature is horizontally higher than the second feature. The first feature being provided below, under or underneath the second feature may indicate that the first feature is directly below or obliquely below the second feature, or simply indicate that the first feature is horizontally lower than the second feature.

In the above description, the descriptions referring to the terms "one embodiment", "some embodiments", "examples", "specific examples", or "some examples", etc. mean that specific features, structures, materials, or characteristics described in combination with an embodiment or example are included in at least one embodiment or example of the present application. In this specification, the schematic descriptions of the above terms do not have to be directed to the same embodiment or example. Furthermore, the specific features, structures, materials or characteristics described may be combined in any one or more embodiments or examples in a suitable manner. Furthermore, different embodiments or examples described in this specification and features in the different embodiments or examples may be combined and incorporated by those skilled in the art without conflicts.

In the prior art, the air-blowing direction of the air outlet is adjusted in a manual manner. When the occupant in the vehicle changes the air-blowing direction of the air conditioner, a toggle button on a grille assembly is required to be adjusted manually to allow the grille assembly to be at a certain angle. When the toggle button is no longer adjusted, the grille assembly will be fixed in that direction, and keep blowing in that direction. However, the air outlet has a single air-blowing mode, and only blows air in the fixed direction, failing to meet diverse needs of users.

In order to solve the above problems, the embodiments of the present application provide an air output device and a vehicle. By adjusting the grilles, it can not only achieve blowing in a single fixed direction, but also avoid the air-blowing from concentrating in a single direction, achieving an effect of simulating natural wind. It should be noted that in this embodiment, as long as the air-blowing is not fixed in a single direction, it is considered as simulating natural wind.

The air output device and the vehicle provided by the embodiments of the present application will be described in detail below in connection with specific embodiments.

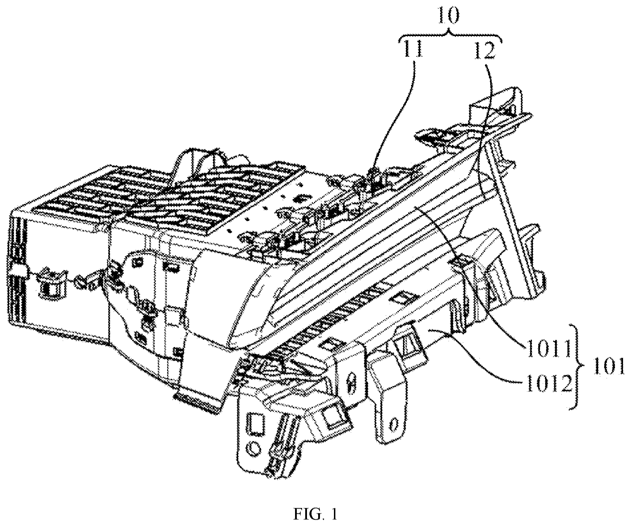

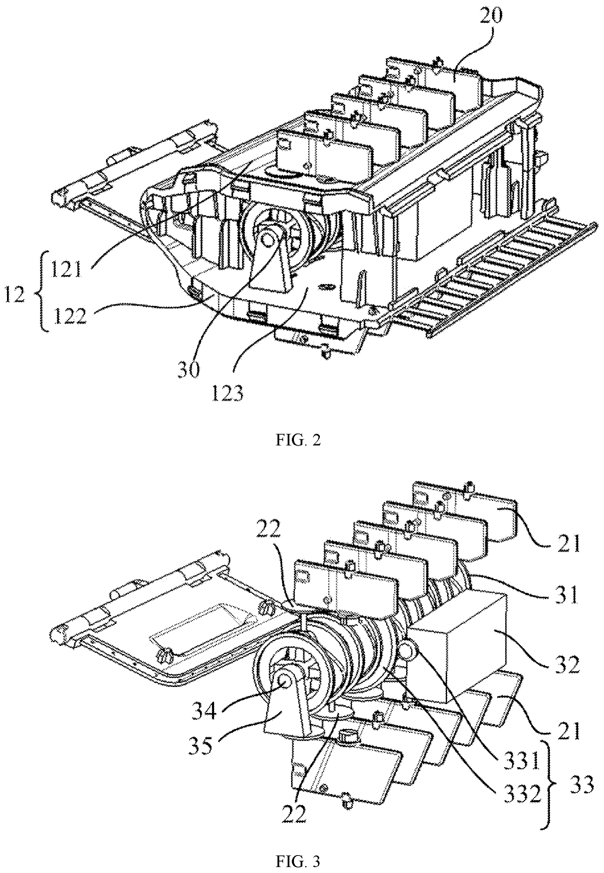

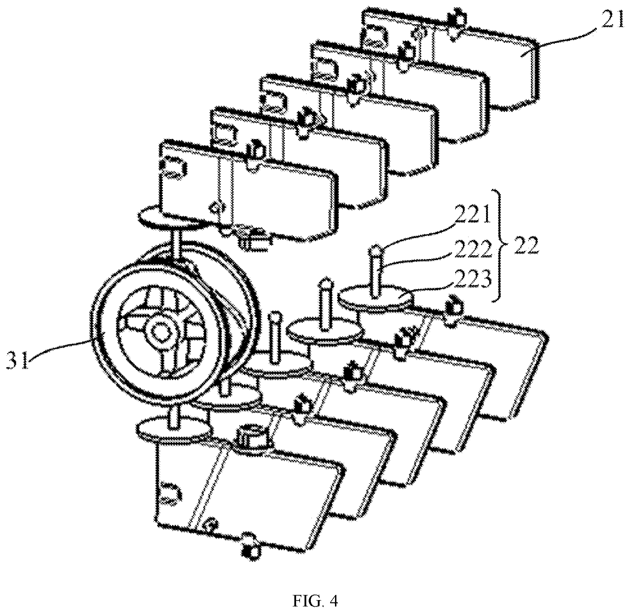

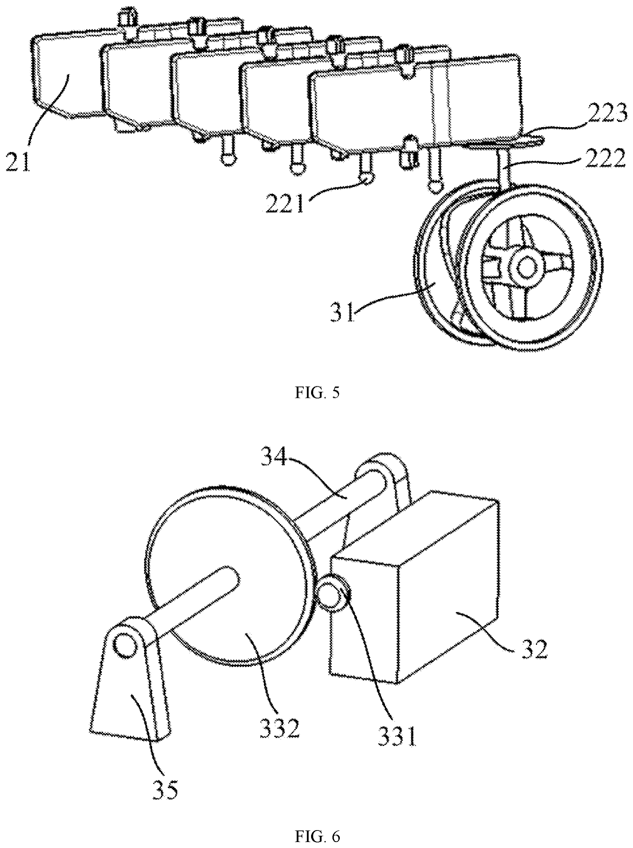

FIG. 1 is a schematic structural diagram of an air output device provided by an embodiment of the present application; FIG. 2 is a schematic structural diagram of the air output device in FIG. 1 after removing a vent outer plate; FIG. 3 is a schematic structural diagram of the air output device in FIG. 1 after removing the vent outer plate and a vent inner plate; FIG. 4 is a first partial schematic diagram of the air output device in FIG. 1; and FIG. 5 is a second partial schematic diagram of the air output device in FIG. 1.

As shown in FIGS. 1 and 2, an embodiment of the present application provides an air output device, including a vent housing 10, a grille assembly 20, and a rotating assembly 30. The air output device is part of the vehicle, and the vehicle further includes an air-conditioner body, and the air output device is detachably installed to the air-conditioner body.

The vent housing 10 has an air outlet 101, the grille assembly 20 is disposed in the air outlet 101, and the rotating assembly 30 is disposed on the vent housing 10.

As shown in FIGS. 3 to 5, the grille assembly 20 includes a plurality of grilles 21 and a plurality of direction-adjusting members 22, each grille 21 is fixedly connected to one direction-adjusting member 22, and the direction-adjusting member 22 is configured to adjust the air-guiding direction of the grille 21.

The rotating assembly 30 includes a driving mechanism and a plurality of rotators 31, and the driving mechanism is configured to allow the plurality of rotators 31 to rotate or stop. Each rotator 31 includes a first groove portion and a second groove portion, and the first groove portion and the second groove portion are connected in a circumferential direction of the rotator 31. One end of the direction-adjusting member 22 is slidably disposed in the first groove portion and/or the second groove portion, and the first groove portion and the second groove portion are configured to adjust the position of the direction-adjusting member 22 in a rotating direction of the grille 21.

The plurality of direction-adjusting members 22 are configured to allow all grilles 21 of the grille assembly to have a same air-guiding direction when the plurality of rotators 31 stop and the plurality of direction-adjusting members 22 are each located in the first groove portion of a corresponding rotator 31.

The plurality of direction-adjusting members 22 are configured to allow at least two grilles 21 to have different air-guiding directions when the plurality of rotators 31 stop and the plurality of direction-adjusting members 22 are each located in the second groove portion of a corresponding rotator 31; and/or
the plurality of direction-adjusting members 22 are configured to allow all grilles 21 of the grille assembly to have changeable air-guiding directions when the plurality of rotators 31 rotate and the plurality of direction-adjusting members 31 are each located in the first groove portion and/or the second groove portion of a corresponding rotator 31.

Where, the grilles 21 are rotatably disposed on the vent housing 10. All grilles 21 of the grille assembly 20 have rotating axes with a same extension direction. In some examples, on the vehicle, the grilles 21 may rotate left and right.

The direction-adjusting members 22 are fixedly connected to the grilles 21, and the positions of the direction-adjusting members 22 can only be changed in a circumferential direction of the grilles 21.

The number of the grilles 21 can be set according to actual needs. The number of the direction-adjusting members 22 is set corresponding to the number of the grilles 21.

The driving mechanism is fixed to the vent housing 10, and the driving mechanism can control the plurality of rotators 31 to rotate simultaneously, and can also control the plurality of rotators 31 to stop simultaneously.

The rotator 31 may be a cylindrical member, and the rotator 31 has an axis along which the rotator 31 rotates. In the circumferential direction of the rotator 31, the first groove portion and the second groove portion may be connected to form a closed shape.

In the circumferential direction of the rotator 31, the rotation of the rotator 31 can allow the direction-adjusting member 22 to slide relative to the rotator 31. Specifically, the direction-adjusting member 22 can slide in the first groove portion, in the second groove portion, or in the first groove portion and the second groove portion relative to the rotator 31.

The number of the rotator 31 can be set according to actual needs. At least one direction-adjusting member 22 is disposed on the rotators 31.

In the circumferential direction of the rotator 31, with the rotation of the rotator 31, the first groove part and the second groove part can adjust the position of the direction-adjusting member 22 in the rotating direction of the grille 21. That is, the position of the direction-adjusting member 22 in the rotating direction of the grille 21 will change, so that the direction-adjusting member 22 causes the grille 21 to rotate.

The plurality of direction-adjusting members 22 allow all grilles 21 of the grille assembly 20 to have a same air-guiding direction when the plurality of rotators 31 stop and the plurality of direction-adjusting members 22 are each located in the first groove portion of a corresponding rotator 31. Specifically, after the driving mechanism controls the plurality of rotators 31 to stop simultaneously, the plurality of direction-adjusting members 22 are each located in the first groove of a corresponding rotator 31, and the direction-adjusting members 22 can each have the same position in the rotating direction of a corresponding grille 21, so that all grilles 21 of the grille assembly 20 can have the same rotating angle, and thus all grilles 21 of the grille assembly 20 have the same air-guiding direction, achieving air-blowing in a fixed direction. It should be noted that the rotating angle of the grille 21 is an angle of the grille 21 relative to the front-and-rear direction of the vehicle.

The plurality of direction-adjusting members 22 are configured to allow at least two grilles 21 to have different air-guiding directions when the plurality of rotators 31 stop and the plurality of direction-adjusting members 22 are each located in the second groove portion of a corresponding rotator 31. Specifically, after the driving mechanism controls the plurality of rotators 31 to stop simultaneously, the plurality of direction-adjusting members 22 are each located in the second groove of a corresponding rotator 31, and at least two direction-adjusting members 22 of the direction-adjusting members 22 have different positions in the rotating directions of their corresponding grilles 21, so that the at least two grilles 21 have different rotating angles, and thus at least two grilles 21 of all grilles 21 of the grille assembly 20 have different air-guiding directions, avoiding air-blowing from concentrating in a single direction, to achieve an effect of simulating natural wind. It should be noted that in this embodiment, as long as the air-blowing is not fixed in the single direction, it is considered as simulating natural wind.

The plurality of direction-adjusting members 22 are configured to allow all grilles 21 of the grille assembly to have changeable air-guiding directions when the plurality of rotators 31 rotate and the plurality of direction-adjusting members 31 are each located in the first groove portion and/or the second groove portion of a corresponding rotator 31. Specifically, after the driving mechanism controls the plurality of rotators 31 to rotate forward and backward, the plurality of direction-adjusting members 22 are each located in the first groove of a corresponding rotator 31, and the positions of the direction-adjusting members 22 are each adjusted in the rotating direction of a corresponding grille 21, so that all grilles 21 of the grille assembly 20 can have changeable air-guiding directions. After the driving mechanism controls the plurality of rotators 31 to rotate forward and backward, the plurality of direction-adjusting members 22 are each located in the second groove of a corresponding rotator 31, and the positions of the direction-adjusting members 22 are each adjusted in the rotating direction of a corresponding grille 21, so that all grilles 21 of the grille assembly 20 can have changeable air-guiding directions. After the driving mechanism controls the plurality of rotators 31 to rotate forward and backward, the plurality of direction-adjusting members 22 are each located in the first groove and the second groove of a corresponding rotator 31, and the positions of the direction-adjusting members 22 are each adjusted in the rotating direction of a corresponding grille 21, so that all grilles 21 of the grille assembly 20 can have changeable air-guiding directions. In this way, it can be avoided that air-blowing concentrates in a single direction, achieving an effect of simulating natural wind. It should be noted that the plurality of direction-adjusting members 22 are each located in the first groove portion and the second groove portion of a corresponding rotator 31, that is, the direction-adjusting members 22 may be located in the first or second groove portions of the rotators 31.

In the air output device provided by the embodiment of the present application, the plurality of direction-adjusting members 22 are configured to allow all grilles 21 of the grille assembly to have a same air-guiding direction when the plurality of rotators 31 stop and the plurality of direction-adjusting members 22 are each located in the first groove portion of a corresponding rotator 31; the plurality of direction-adjusting members 22 are configured to allow at least two grilles 21 to have different air-guiding directions when the plurality of rotators 31 stop and the plurality of direction-adjusting members 22 are each located in the second groove portion of a corresponding rotator 31. In this way, not only the air-blowing in a fixed direction can be achieved, but also air-blowing can be avoided concentrating in a single direction and the effect of simulating natural wind can be achieved. Consequently, the air outlet may achieve a diversified air-blowing mode, meeting diverse needs of users.

Furthermore, in the air output device provided by the embodiments of the present application, it is also possible that the plurality of direction-adjusting members 22 are configured to allow all grilles 21 of the grille assembly to have a same air-guiding direction when the plurality of rotators 31 stop and the plurality of direction-adjusting members 22 are each located in the first groove portion of a corresponding rotator 31; and the plurality of direction-adjusting members 22 are configured to allow all grilles 21 of the grille assembly to have changeable air-guiding directions when the plurality of rotators 31 rotate and the plurality of direction-adjusting members 31 are each located in the first groove portion and/or the second groove portion of a corresponding rotator 31. In this way, not only the air-blowing in a fixed direction can be achieved, but also air-blowing can be avoided concentrating in a single direction and the effect of simulating natural wind can be achieved. Consequently, the air outlet may achieve a diversified air-blowing mode, meeting diverse needs of users.

Furthermore, in the air output device provided by the embodiment of the present application, it is also possible that the plurality of direction-adjusting members 22 are configured to allow all grilles 21 of the grille assembly to have a same air-guiding direction when the plurality of rotators 31 stop and the plurality of direction-adjusting members 22 are each located in the first groove portion of a corresponding rotator 31; the plurality of direction-adjusting members 22 are configured to allow at least two grilles 21 to have different air-guiding directions when the plurality of rotators 31 stop and the plurality of direction-adjusting members 22 are each located in the second groove portion of a corresponding rotator 31; and the plurality of direction-adjusting members 22 are configured to allow all grilles 21 of the grille assembly to have changeable air-guiding directions when the plurality of rotators 31 rotate and the plurality of direction-adjusting members 31 are each located in the first groove portion and/or the second groove portion of a corresponding rotator 31. In this way, not only the air-blowing in a fixed direction can be achieved, but also air-blowing can be avoided concentrating in a single direction and the effect of simulating natural wind can be achieved. Consequently, the air outlet may achieve a diversified air-blowing mode, meeting diverse needs of users.

Optionally, as shown in FIGS. 1 and 2, the vent housing 10 may include a vent outer plate 11 and a vent inner plate 12, the vent outer plate 11 has an air passage, the vent inner plate 12 is disposed in the air passage, and the vent inner plate 12 is configured to divide the air outlet 101 into a first outlet 1011 and a second outlet 1012.

Where multiple grilles 21 are provided in the first outlet 1011 and multiple grilles 21 are provided in the second outlet 1012.

The number of the grilles 21 in the first outlet 1011 may be the same as, or may be different from, the number of the grilles in the second outlet 1012. In this embodiment, the number of the grilles 21 in the first outlet 1011 is the same as the number of the grilles in the second outlet 1012.

Optionally, the vent inner plate 12 includes a first inner plate 121 and a second inner plate 122, the first inner plate 121 and the second inner plate 122 are connected, and the first inner plate 121 and the second inner plate 122 enclose a cavity 123.

Where the first inner plate 121 and the vent outer plate 11 enclose to form the first outlet 1011, and the second inner plate 122 and the vent outer plate 11 enclose to form the second outlet 1012.

The rotating assembly 30 may be located within the cavity 123. This setting can save layout space.

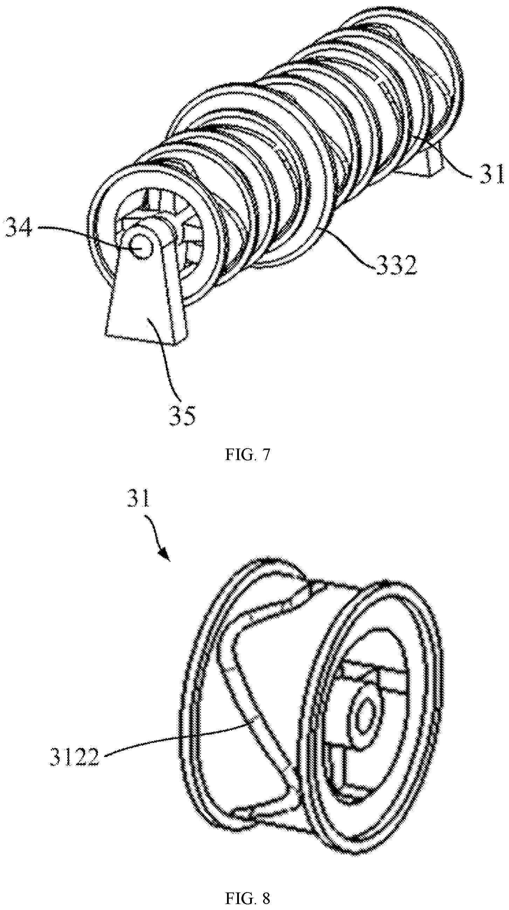

FIG. 6 is a schematic structural diagram of the rotating assembly of the air output device in FIG. 2 after removing the rotators; and FIG. 7 is a schematic structural diagram of the rotating assembly of the air output device in FIG. 2 after removing a driving motor and a driving gear.

As shown in FIGS. 3, 6, and 7, the driving mechanism includes a driving motor 32, a transmission assembly 33, a rotating shaft 34 and two mounting seats 35. The driving motor 32 and the two mounting seats 35 can be installed on the second inner plate 122, the rotating shaft 34 is rotatably mounted on the two mounting seats 35, the plurality of rotators 31 is fixed on the rotating shaft 34, and the driving motor 32 is configured to allow the plurality of rotators 31 to rotate or stop through the transmission assembly 33.

The driving motor 32 may be a stepper motor or other types of motor.

The transmission assembly 33 can be driven by a gear, belt, or connecting rod, and is not specifically limited here. In this embodiment, the transmission assembly 33 adopts gear transmission. The transmission assembly 33 includes a driving gear 331 and a driven gear 332. The driving gear 331 is fixed on a motor shaft of the stepper motor, the driven gear 332 is fixed on the rotating shaft 34, and the driving gear 331 is engaged with the driven gear 332. The diameter of the addendum circle of the driving gear 331 and the diameter of the addendum circle of the driven gear 332 may be set as needed. In this embodiment, the diameter of the addendum circle of the driving gear 331 is smaller than the diameter of the addendum circle of the driven gear 332.

The rotators 31 are coaxially arranged with the rotating shaft 34, and the rotators 31 rotate or stop synchronously with the rotating shaft 34.

It should be noted that when the driving mechanism controls the plurality of rotators 31 to rotate forward and backward, the rotational speed of the driving motor 32 can change so that the swing angular velocity of all grilles 21 of the grille assembly 20 can change. As a result, the swing angular velocity of all grilles 21 of the grille assembly 20 can be controlled by controlling the rotational speed of the driving motor 32, thereby realizing different air-blowing modes with varying swing angular velocities.

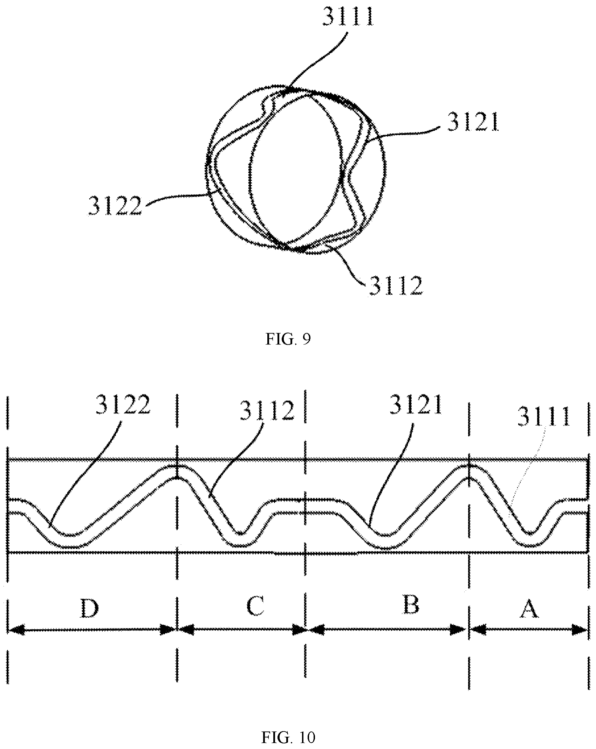

FIG. 8 is a schematic structural diagram of the rotator of the rotating assembly of the air output device in FIG. 2; FIG. 9 is a schematic diagram of the circumferential surface of the rotator in FIG. 8; and FIG. 10 is a spread schematic diagram of the circumferential surface in FIG. 9.

Optionally, as shown in FIGS. 8-10, the first groove portion of the rotator 31 includes a first groove 3111 and a third groove 3112, the second groove portion of the rotator includes a second groove 3121 and a fourth groove 3122. In the circumferential direction of the rotator 31, the first groove 3111 is connected to the second groove 3121 and the fourth groove 3122, respectively, and the third groove 3112 is connected to the second groove 3121 and the fourth groove 3122, respectively.

Where the first groove 3111 is disposed opposite to the third groove 3112, and the second groove 3121 is disposed opposite to the fourth groove 3122.

The first groove 3111, the second groove 3121, the third groove 3112 and the fourth groove 3122 enclose to form a closed shape, and in the circumferential direction of the rotator 31, the first groove 3111 has a same length with the third groove 3112, and the second groove 3121 has a same length with the fourth groove 3122.

In an axial direction of the rotating shaft 34, the first grooves 3111 of all rotators 31 of the rotating assembly 30 correspond to each other, the second grooves 3121 of all rotators 31 of the rotating assembly 30 correspond to each other, the third grooves 3112 of all rotators 31 of the rotating assembly 30 correspond to each other, and the fourth grooves 3122 of all rotators 31 of the rotating assembly 30 correspond to each other.

To facilitate understanding, the circumferential surface of the rotator 31 is spread to form an spread plane, and the spread plane is divided into four areas, namely a first area A, a second area B, a third area C and a fourth area D. In an extension direction of the spread plane, the first area A has a same length with the third area C, and the second area B has a same length with the fourth area D. The first groove 3111 is located in the first area A, the second groove 3121 is located in the second area B, the third groove 3112 is located in the third area C, the fourth groove 3122 is located in the fourth area D. The first groove 3111, the second groove 3121, the third groove 3112 and the fourth groove 3122 are connected in sequence on the spread plane of the circumferential surface of the rotator 31. In the spread plane of the circumferential surface of the rotator 31, the first groove 3111 coincides with the third groove 3112 after being translated 180° along the extension direction of the spread plane. In the spread plane of the circumferential surface of the rotator 31, the second groove 3121 is completely misaligned with the fourth groove 3122 after being translated 180° along the extension direction of the spread plane, that is, there is no coincidence at any position.

It should be noted that when the driving mechanism controls the plurality of rotators 31 to rotate forward and backward, the rotating angle range of the rotator 31 can change, so that the swing positions and the swing angles of all grilles 21 of the grille assembly 20 can change. Thus, by controlling the positions of all direction-adjusting members 22 of the grille assembly 20 with respect to respective corresponding rotators 31, the swing positions and swing angles of all grilles 21 of the grille assembly 20 can be controlled, and thus air-blowing modes with different swing positions can be realized, air-blowing modes with different swing angles can be realized, and air-blowing modes with different swing positions and different swing angles can also be realized. The rotating angle range of the rotator 31 may be within one of the first groove 3111, the second groove 3121, the third groove 3112 and the fourth groove 3122, or within two connected grooves of the first groove 3111, the second groove 3121, the third groove 3112 and the fourth groove 3122, or all direction-adjusting members 22 of the grille assembly 20 are simultaneously located within three sequentially connected grooves of the first groove 3111, the second groove 3121, the third groove 3112 and the fourth groove 3122, or all direction-adjusting members 22 of the grille assembly 20 are simultaneously located within the first groove 3111, the second groove 3121, the third groove 3112 and the fourth groove 3122.

It should also be noted that when the driving mechanism controls the plurality of rotators 31 to rotate forward and backward, the air-blowing modes with different swing angular velocities, swing positions and swing angles can be achieved by controlling the rotational speeds of the driving motors 32 and controlling the positions of all direction-adjusting members 22 of the grille assembly 20 relative to respective corresponding rotators 31.

Furthermore, two direction-adjusting members 22 on each rotator 31 correspond to one grille 21 in the first outlet 1011 and one grille 21 in the second outlet 1012, respectively, and the two direction-adjusting members 22 on each rotator 31 are apart by 180° in the circumferential direction of the rotator 31.

In an optional embodiment, five grilles 21 are provided in the first outlet 1011 and five grilles 21 are provided in the second outlet 1012, and the rotating assembly 30 includes five rotators 31. The spread planes of the circumferential surfaces of the five rotators 31 may all be first spread planes. The five rotators 31 include a first rotator, a second rotator, a third rotator, a fourth rotator and a fifth rotator. The first grooves 3111 of the first rotator, the second rotator, the third rotator, the fourth rotator and the fifth rotator coincide on the first spread planes. The third grooves 3112 of the first rotator, the second rotator, the third rotator, the fourth rotator and the fifth rotator coincide on the first spread planes. The second grooves 3121 of the first rotator, the second rotator, the third rotator, the fourth rotator and the fifth rotator are completely misaligned on the first spread planes. The fourth grooves 3122 of the first rotator, the second rotator, the third rotator, the fourth rotator and the fifth rotator are completely misaligned on the first spread planes.

After the rotators 31 of the rotating assembly 30 stop, all grilles 21 in the first outlet 1011 are located in the first grooves 3111, and all grilles 21 in the second outlet 1012 are located in the third grooves 3112, so that all grilles 21 of the grille assembly 20 can have same rotating angle, and all grilles 21 of the grille assembly 20 can have the same air-guiding direction, thereby achieving air-blowing in a fixed direction.

After the rotators 31 of the rotating assembly 30 stop, all grilles 21 in the first outlet 1011 are located in the second grooves 3121, and all grilles 21 in the second outlet 1012 are located in the fourth grooves 3122, so that all grilles 21 of the grille assembly 20 can have different rotating angles, and all grilles 21 of the grille assembly 20 can have different air-guiding directions, thereby avoiding air-blowing concentrating in a certain direction and achieving effect of simulating natural wind.

Optionally, as shown in FIGS. 2 and 4, the direction-adjusting member 22 includes a direction-adjusting ball 221 and a direction-adjusting rod 222, one end of the direction-adjusting rod 222 is fixedly connected to the grille 21, the other end of the direction-adjusting rod 222 is fixedly connected to the direction-adjusting ball 221, and the direction-adjusting ball 221 is embedded in the first groove portion and the second groove portion.

Where the first groove portion and the second groove portion need to meet that the direction-adjusting ball 221 is not easily stuck when the rotator 31 rotates.

The direction-adjusting member 22 further includes a baffle 223, which is fixed on the direction-adjusting rod 222. The vent inner plate 12 has a through hole, the direction-adjusting rod 222 passes through the through hole, and the baffle 223 covers the through hole. In this way, the problem of air leakage at the through hole of the vent inner plate 12 can be avoided.

An embodiment of the present application provides a vehicle, including: an air-conditioner body and the air output device, and the air output device is detachably installed on the air-conditioner body.

The air output device in this embodiment has the same structure as the air output device provided in any one of the above-mentioned embodiments and can bring the same or similar technical effects, which will not be described in detail here, and specifically may refer to the description of the above-mentioned embodiments.

Finally, it should be illustrated that the above embodiments are only used to illustrate the technical solutions of the present application, rather than limit them. Although the present application has been described in detail with reference to the above embodiments, it should be understood by those skilled in the art that the technical solutions recited in the above embodiments can be changed, or some or all of the technical features therein can be equivalently replaced, and these changes or replacements do not make the essence of the corresponding technical solutions deviate from the scope of the technical solutions of the embodiments of the present application.

## Claims

1. An air output device, comprising a vent housing, a grille assembly and a rotating assembly, wherein
the vent housing has an air outlet, the grille assembly is disposed in the air outlet, and the rotating assembly is disposed on the vent housing;
the grille assembly comprises a plurality of grilles and a plurality of direction-adjusting members, each of the grilles is fixedly connected to one of the direction-adjusting members, and the direction-adjusting members are configured to adjust air-guiding directions of the grilles;
the rotating assembly comprises a driving mechanism and a plurality of rotators, and the driving mechanism is configured to allow the plurality of rotators to rotate or stop, each of the rotators comprises a first groove portion and a second groove portion, and the first groove portion and the second groove portion are connected in a circumferential direction of the rotator, one end of the direction-adjusting member is slidably disposed in the first groove portion and/or the second groove portion, and the first groove portion and the second groove portion are configured to adjust a position of the direction-adjusting member in a rotating direction of the grille;
the plurality of direction-adjusting members are configured to allow all grilles of the grille assembly to have a same air-guiding direction when the plurality of rotators stop and the plurality of direction-adjusting members are each located in the first groove portion of a corresponding rotator;
the plurality of direction-adjusting members are configured to allow at least two grilles to have different air-guiding directions when the plurality of rotators stop and the plurality of direction-adjusting members are each located in the second groove portion of a corresponding rotator; and/or,
the plurality of direction-adjusting members are configured to allow all grilles of the grille assembly to have changeable air-guiding directions when the plurality of rotators rotate and the plurality of direction-adjusting members are each located in the first groove portion and/or the second groove portion of a corresponding rotator.

2. The air output device according to claim 1, wherein the vent housing comprises a vent outer plate and a vent inner plate, the vent outer plate has an air passage, the vent inner plate is disposed in the air passage, and the vent inner plate is configured to divide the air outlet into a first outlet and a second outlet;
multiple grilles are provided in the first outlet, and multiple grilles are provided in the second outlet.

3. The air output device according to claim 2, wherein the vent inner plate comprises a first inner plate and a second inner plate, the first inner plate and the second inner plate are connected, and the first inner plate and the second inner plate enclose to form a cavity;
the rotating assembly is located in the cavity, and the driving mechanism comprises a driving motor, a transmission assembly, a rotating shaft and two mounting seats, wherein the driving motor and the two mounting seats are mounted on the second inner plate, the rotating shaft is rotatably mounted on the two mounting seats, and the plurality of rotators are fixed on the rotating shaft, and the driving motor is configured to allow the plurality of rotators to rotate or stop through the transmission assembly.

4. The air output device according to claim 3, wherein the first groove portion of the rotator comprises a first groove and a third groove, and the second groove portion of the rotator comprises a second groove and a fourth groove, and in the circumferential direction of the rotator, the first groove is connected to the second groove and the fourth groove, respectively, and the third groove is connected to the second groove and the fourth groove, respectively;
the first groove, the second groove, the third groove and the fourth groove are connected in sequence on an spread plane of a circumferential surface of the rotator, the first groove coincides with the third groove after being translated 180°on the spread plane in an extension direction of the spread plane, and the second groove is completely misaligned with the fourth groove after being translated 180° on the spread plane in the extension direction of the spread plane.

5. The air output device according to claim 4, wherein each rotator is provided with two direction-adjusting members, and the two direction-adjusting members on each rotator correspond to one grille in the first outlet and one grille in the second outlet, respectively, and the two direction-adjusting members on each rotator are apart by 180° in the circumferential direction of the rotator.

6. The air output device according to claim 5, wherein five grilles are provided in the first outlet, and five grilles are provided in the second outlet, and the rotating assembly comprises five rotators; spread planes of the circumferential surfaces of the five rotators are first spread planes, the five rotators comprise a first rotator, a second rotator, a third rotator, a fourth rotator and a fifth rotator, the first grooves of the first rotator, the second rotator, the third rotator, the fourth rotator and the fifth rotator coincide on the first spread planes, and the third grooves of the first rotator, the second rotator, the third rotator, the fourth rotator and the fifth rotator coincide on the first spread planes, the second grooves of the first rotator, the second rotator, the third rotator, the fourth rotator and the fifth rotator are completely misaligned on the first spread planes, and the fourth grooves of the first rotator, the second rotator, the third rotator, the fourth rotator and the fifth rotator are completely misaligned on the first spread plane.

7. The air output device according to claim 3, wherein the driving motor is a stepper motor, the transmission assembly comprises a driving gear and a driven gear, the driving gear is fixed on a motor shaft of the stepper motor, the driven gear is fixed on the rotating shaft, and the driving gear is engaged with the driven gear.

8. The air output device according to claim 2, wherein the direction-adjusting member includes a direction-adjusting ball and a direction-adjusting rod, one end of the direction-adjusting rod is fixedly connected to the grille, the other end of the direction-adjusting rod is fixedly connected to the direction-adjusting ball, and the direction-adjusting ball is embedded in the first groove portion and the second groove portion.

9. The air output device according to claim 8, wherein the direction-adjusting member further comprises a baffle, the baffle is fixed to the direction-adjusting rod, the vent inner plate has a through hole, the direction-adjusting rod passes through the through hole, and the baffle covers the through hole.

10. A vehicle, comprising an air-conditioner body and the air output device according to any one of claims 1-9, wherein
the air output device is detachably installed on the air-conditioner body.
